# FASCICULE DE BREVET EUROPEEN

(11) **EP 0 404 160 B1**
(45) Date de publication et mention de la délivrance du brevet: **21.04.1993**
(21) Numéro de dépôt: 90111778.8
(22) Date de dépôt: 21.06.1990
(51) Int. Cl.: F02M 37/22, B01D 35/18

(54) **Séparateur centrifuge pour liquide figeable, notamment pour gazole**
Zentrifugalabscheider für eine koagulierbare Flüssigkeit, insbesondere Dieselkraftstoff
Centrifugal separator for coagulable liquid, particularly Diesel fuel

(30) Priorité: 21.06.1989 FR 8908283
(43) Date de publication de la demande: 27.12.1990
(73) Titulaire: GEC ALSTHOM SA, 75116 Paris (FR)
(72) Inventeur: Gilas, François, F-77370 La Chapelle Rablais (FR)
(74) Mandataire: Weinmiller, Jürgen

(56) Documents cités:
- DE-A- 2 845 519
- DE-A- 3 543 842
- DE-A- 3 724 410
- FR-A- 2 386 685
- FR-A- 2 548 920
- FR-A- 2 621 959
- US-A- 3 931 011

## Description

La présente invention trouve application, de manière générale, lorsqu'un liquide figeable doit être traité en vue d'en séparer des éléments non miscibles.

L'adjectif "figeable" est employé ici pour indiquer que l'invention trouve plus particulièrement application dans le cas où le liquide à traiter comporte certains composants éventuellement miscibles, tels que des paraffines dans le cas du gazole, qui tendent à se solidifier en premier lorsque la température s'abaisse et qui peuvent alors entraîner un blocage localisé d'un circuit dans d'autres parties duquel le liquide reste suffisamment fluide. Il peut cependant s'agir aussi d'un liquide dont la solidification se produit seulement à une température déterminée et est alors totale.

L'invention trouve plus particulièrement encore application dans les véhicules, notamment dans les camions, dont le moteur est du type Diesel et consomme du gazole. Le circuit d'alimentation du moteur à partir du réservoir d'un camion de type courant comporte les éléments suivants :
- une pompe d'alimentation à pression de refoulement modérée pour amener le gazole à partir du réservoir,
- un séparateur centrifuge statique pour intercepter des gouttelettes d'eau et des particules solides éventuellement contenues dans le gazole,
- des éléments filtrants pour intercepter d'autres particules solides de dimensions plus ou moins importantes, par exemple un préfiltre pour intercepter de grosses particules et un filtre fin pour intercepter des particules plus fines,
- et une pompe d'injection pour injecter des volumes convenables de gazole à des instants convenables dans chacun des cylindres du moteur.

Un élément filtrant peut être intégré dans le séparateur centrifuge.

Un tel camion est parfois amené a démarrer et circuler alors que la température de l'atmosphère est suffisamment basse pour solidifier des paraffines contenues dans le gazole. C'est pourquoi un besoin important et depuis longtemps ressenti est d'éviter que des particules de paraffine solidifiées ne viennent bloquer par temps froid des passages étroits formés pour le gazole dans le séparateur. De tels passages étroits sont notamment constitués par les pores de l'élément filtrant qui est éventuellement intégré dans le séparateur.

Une solution connue au problème posé par ce besoin consiste à ajouter au gazole des additifs qui retardent la formation et la croissance des particules de paraffine solidifiée.

Une autre solution apparaît dans un séparateur connu par FR-A-2 621 959, qui ne comporte pas de moyens de séparation centrifuge. Certains éléments de ce séparateur lui sont communs,quant à leurs fonctions indiquées ci-dessous, avec un séparateur selon la présente invention. Par conséquent, l'invention part, dans le préambule de la revendication 1, de cet état de la technique.

Un séparateur similaire est décrit dans le document DE-A-28 45 519 (Bosch German Patent Application). Dans ce séparateur connu ledit bol de séparation est constitué par une capsule de filtration, ledit couvercle présente la forme générale d'une plaque épaisse, et ladite conduite d'entrée s'étend dans l'épaisseur de cette plaque, de même qu'un circuit d'eau chaude qui constitue ledit élément chauffant. Ce premier séparateur connu présente notamment l'inconvénient de mal séparer certaines impuretés telles que des gouttelettes d'eau et de nécessiter des remplacements trop fréquents de l'élément filtrant.

Un deuxième séparateur connu comporte un déflecteur de centrifugation fixe disposé dans ledit bol de séparation qui constitue alors un bol de centrifugation. Il a été fabriqué par la firme américaine RACOR Industries Inc, Modesto, Calif. U.S.A. Il est dérivé d'un séparateur qui a été décrit dans le brevet américain 3 931 011 (Richards et al) et auquel a été ajouté ledit élément chauffant sous la forme d'une résistance électrique. Cette résistance baigne dans du gazole centrifugé circulant dans une enceinte qui est formée au-dessus du couvercle du bol de centrifugation et qui contient un élément filtrant au-dessus de cette résistance. Cette dernière est ainsi placée, compte tenu du sens de circulation du liquide, en amont de cet élément, et elle est provisoirement exposée au fond de l'enceinte chaque fois qu'on change l'élément filtrant après encrassement de ce dernier.

Ce deuxième séparateur connu assure ses fonctions d'une manière généralement correcte mais ses utilisateurs auraient préféré qu'il soit moins coûteux à l'achat, moins encombrant, et plus facile à entretenir sans risque de détérioration. Il est d'autre part évidemment souhaitable de minimiser l'énergie électrique qui est consommée pour le chauffage du gazole au départ par temps froid.

La présente demanderesse a par ailleurs obtenu un brevet français n° 2 596 668 pour un séparateur centrifuge dépourvu d'élément chauffant.

La présente invention a notamment pour buts, lorsqu'elle est appliquée à un séparateur pour l'alimentation en gazole d'un moteur Diesel d'un véhicule tel qu'un camion,
- de diminuer le coût et/ou l'encombrement du séparateur,
- d'assurer un chauffage plus efficace et/ou mieux réparti du gazole dans le séparateur,
- et/ou de minimiser les risques de détérioration de l'élément chauffant situé dans un tel séparateur, notamment lors d'opérations de maintenance telles qu'un changement d'élément filtrant.

Ces buts sont atteints par le séparateur tel que caractérisé par la revendication 1. En ce qui concerne des caractéristiques d'une mise en oeuvre préférée de l'invention, référence est faite aux revendications secondaires. Il doit cependant être compris que l'invention peut s'appliquer au traitement d'autres liquides figeables, notamment d'autres hydrocarbures pouvant être utilisés à d'autres fins. Il peut s'agir par exemple d'un fioule consommé dans une chaudière. Certains au moins des buts précédemment indiqués peuvent être alors visés.

A l'aide des figures schématiques ci-jointes, on va décrire ci-après ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence. Le mode de mise en oeuvre donné en exemple comporte les dispositions communes et préférées décrites ci-dessus.
- La figure 1 représente une vue en coupe axiale d'un séparateur réalisé selon la présente invention.
- La figure 2 représente une vue de dessus de ce séparateur.
- Les figures 3, 4 et 5 représentent des vues de ce séparateur en coupes transversales selon des plans III-III, IV-IV et V-V de la figure 1, respectivement.

Le séparateur donné en exemple est destiné au filtrage du gazole qui alimente le moteur Diesel d'un camion.

Il présente un axe vertical A. Un tube axial 1 solidarise les parties haute et basse du séparateur.

Le séparateur comporte une entrée 2 pour recevoir le gazole qui constitue le liquide à traiter et une conduite d'entrée 4 pour conduire ce liquide à un déflecteur 6 qui lui donne une composante de vitesse circonférentielle.

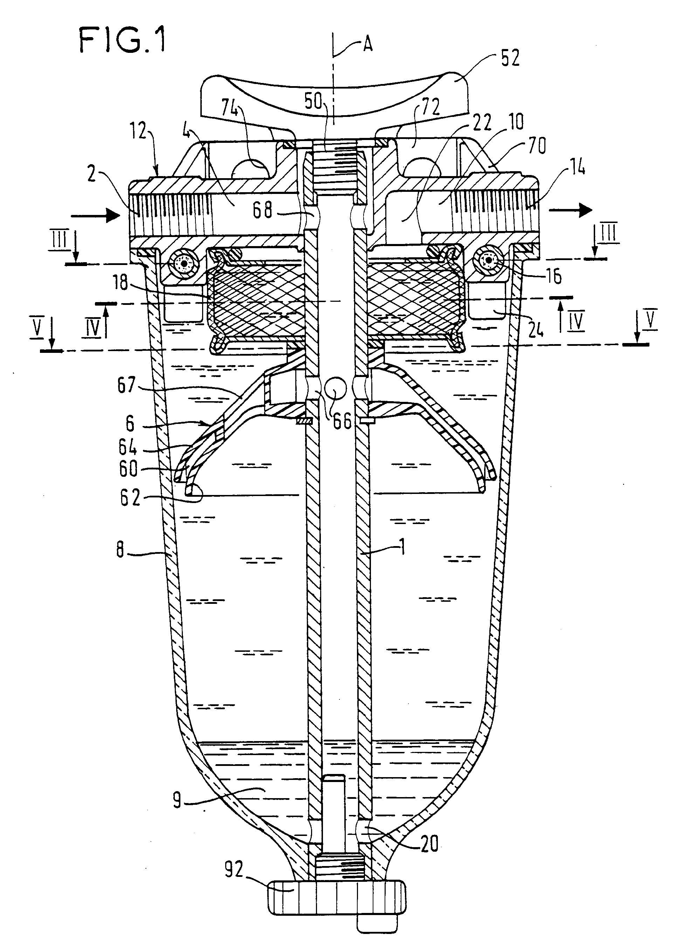

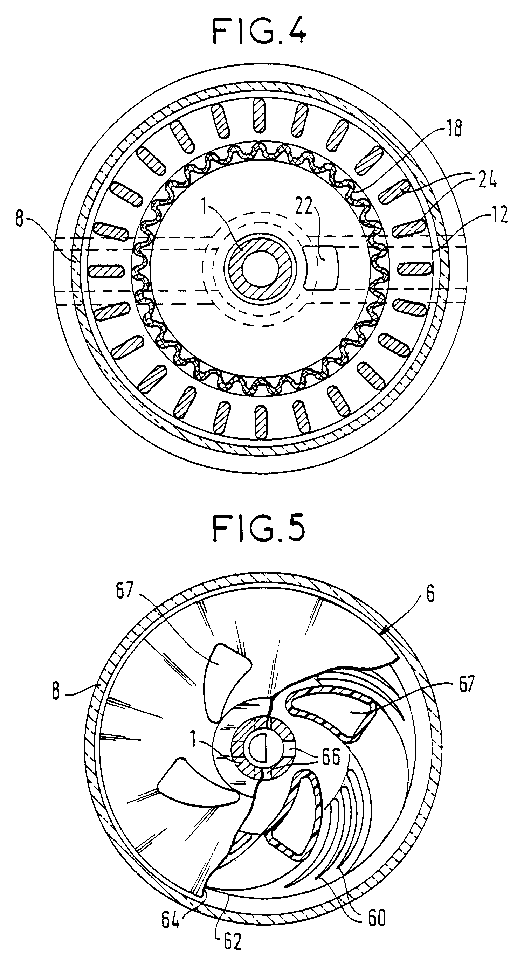

Ce déflecteur comporte pour cela (voir fig.1 et 5) des ailettes 60 qui s'étendent en spirale autour de l'axe A et qui, sur leur hauteur, joignent deux coupes l'une inférieure 62, l'autre supérieure 64.

Les canaux spiralés formés entre ces ailettes reçoivent le liquide à partir d'ouvertures 66 percées dans l'arbre tubulaire 1 qui a reçu ce liquide par une ouverture haute 68 communiquant avec la conduite d'entrée 4. L'étroitesse et la courbure de ces canaux font apparaître, au sein du gazole qui les parcourt à grande vitesse, une force centrifuge qui précipite les gouttelettes d'eau contre les ailettes. Ces gouttelettes sont ainsi rassemblées en gouttes qui peuvent ensuite décanter plus facilement par gravité naturelle ou par force centrifuge.

Un bol de centrifugation désigné par sa paroi latérale 8 guide la rotation de ce liquide et y fait naître une force centrifuge qui amène sélectivement au contact de cette paroi des impuretés relativement denses telles que l'eau ou des poussières qui sont contenues dans ce liquide. Ces impuretés descendent ensuite sous l'action de la gravité vers le fond 9 de ce bol tandis que le liquide centrifugé remonte vers le haut du bol. Ce bol est réalisé en une matière à la fois résistante et transparente pour permettre de voir les impuretés qui s'y sont accumulées.

L'eau qui est ainsi rassemblée au fond 9 de ce bol en est évacuée quand cela est nécessaire par un passage qui est ouvert par dévissage partiel d'un bouchon de purge 92. Elle passe d'abord pour cela à l'intérieur du tube axial 1 par des ouvertures 20. Quant au nettoyage des impuretés solides adhérant à la paroi du bol, il peut être fait par démontage et lavage de ce dernier.

Une conduite de sortie 10 conduit le liquide centrifugé à une sortie du séparateur.

Un couvercle métallique massif 12 obture l'ouverture haute du bol tout en formant dans sa masse métallique un système de raccordement intégré qui constitue les conduites 4 et 10. Ce couvercle est appuyé sur le bord supérieur du bol par une vis 50 que l'on visse dans le tube axial 1 à l'aide d'une poignée 52. Il présente la forme générale d'une plaque épaisse horizontale dans l'épaisseur de laquelle les conduites d'entrée et de sortie sont creusées horizontalement et radialement.

Un élément chauffant, constitué par une résistance électrique blindée 16, est inséré dans la masse métallique de ce couvercle. Ce dernier est constitué d'un métal bon conducteur thermique pour conduire la chaleur entre cette résistance et le système de raccordement intégré dans ce couvercle. Cette résistance est linéaire et fait sensiblement le tour de l'axe A.

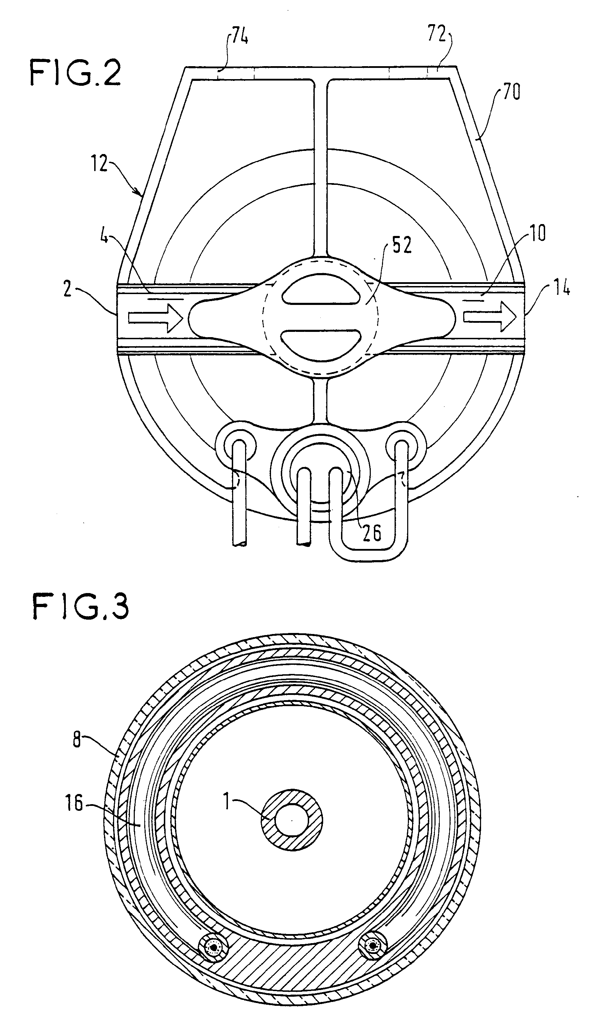

Un thermostat 26 est placé en contact thermique avec le couvercle 12 (voir fig.2). Il commande la résistance 16 pour maintenir la température de ce couvercle entre des limites prédéterminées.

Une paroi filtrante 18 entoure le tube axial 1 au dessous du couvercle 12 au voisinage de celui-ci. Elle est traversée par le liquide centrifugé pour arrêter des particules solides relativement grosses charriées par ce liquide de manière à fournir en sortie un liquide préfiltré. Elle présente deux faces, amont et aval par rapport au sens de circulation du liquide qui la traverse.

Plus particulièrement ce liquide provient de la partie centrale du bol 8 située au-dessous du déflecteur 6. Il est remonté pour cela à travers quatre ouvertures 67 formées dans ce déflecteur et il arrive autour de la paroi 18 qu'il traverse radialement vers l'intérieur. Il rejoint ensuite la conduite de sortie 10 en montant à travers un passage 22 formé dans le couvercle 12.

La paroi 18 est constituée par une cartouche filtrante qu'il est facile de nettoyer ou de changer lorsqu'on démonte le séparateur après dévissage de la vis 50.
Comme précédemment indiqué, le couvercle 12 présente un prolongement caloporteur faisant saillie axialement du côté de la paroi filtrante au voisinage et en regard de la face amont de cette dernière, c'est-à-dire plus particulièrement qu'il fait saillie vers le bas autour de cette paroi. Il forme des ailettes 24 qui s'étendent radialement et axialement et qui se succèdent angulairement autour de la paroi filtrante. La chaleur qu'il apporte ainsi par temps froid empêche un blocage de cette paroi par des particules solidifiées. Le couvercle 12 comporte, à des niveaux successifs de bas en haut :
- le prolongement caloporteur constitué par les ailettes 24,
- un niveau de chauffage comportant l'élément chauffant 16,
- et un niveau de raccordement dans lequel est formé le système de raccordement.

Il présente par ailleurs une protubérance latérale 70 (voir fig.1 et 2) qui comporte une plaque de fixation verticale 72 percée de deux trous 74 pour le passage de boulons non représentés permettant de fixer le séparateur à une paroi verticale d'un camion.

Il est par ailleurs clair que l'élément chauffant pourraît être constitué autrement que par une résistance électrique. Il pourraît par exemple l'être par un circuit d'eau chaude qui pourraît avantageusement être formé dans le couvercle en même temps et par les mêmes méthodes que le système de raccordement précédemment mentionné.

## Revendications

1. Séparateur pour liquide figeable, notamment pour gazole, comportant:
- un bol de séparation (8) et une ouverture de bol,
- un couvercle épais (12) pour obturer ladite ouverture de bol, ce couvercle étant au moins partiellement constitué d'un matériau thermiquement conducteur et présentant une face interne du côté dudit bol de séparation et une face externe du côté opposé,
- une conduite d'entrée (4) formée dans ce couvercle pour recevoir un liquide à traiter qui contient des impuretés ainsi que des éléments figeables sous l'effet du froid et pour amener ce liquide dans ledit bol de séparation pour qu'il y subisse un processus de séparation de ces impuretés,
- un élément chauffant (16) pour chauffer ledit liquide,
- une paroi filtrante (18) portée par ledit couvercle à partir de sa dite face interne, et disposée dans ledit bol de séparation, de manière à recevoir, sur une face amont de cette paroi, ledit liquide à traiter ayant subi ledit processus de séparation,
- et une sortie du séparateur (14) pour recevoir ledit liquide à traiter qui a traversé ladite paroi filtrante de ce couvercle,
- ce séparateur étant caractérisé par le fait que l'élément chauffant (16) est disposé dans ledit couvercle pour chauffer ledit liquide à traiter à son passage dans ladite conduite d'entrée (4), et que ledit couvercle (12) comporte un prolongement caloporteur (24) faisant saillie sur sa dite face interne en regard et à proximité de ladite face amont de ladite paroi filtrante (18) de manière à empêcher que cette paroi puisse être bloquée par lesdits éléments figeables.

2. Séparateur selon la revendication 1, caractérisé par le fait que ledit prolongement caloporteur forme des ailettes (24).

3. Séparateur selon la revendication 2 dans lequel ledit bol de séparation (8) présente un axe (A) qui est aussi celui de sa dite ouverture et de ladite paroi filtrante (18), le couvercle (12) présentant la forme générale d'une plaque épaisse perpendiculaire à cet axe, des conduites d'entrée (4) et de sortie (10) étant creusées parallèlement à cette plaque dans l'épaisseur de celle-ci, et lesdites ailettes s'étendant radialement et axialement et se succèdant angulairement autour dudit axe (A).

4. Séparateur selon la revendication 3, caractérisé par le fait que ladite paroi filtrante (18) et ledit bol de séparation (8) sont disposés sous ledit couvercle (12), ledit (12) couvercle comportant, à des niveaux successifs de bas en haut :
- ledit prolongement caloporteur (24), ce prolongement entourant ladite paroi filtrante (18),
- un niveau de chauffage comportant ledit élément chauffant (16), cet élément étant linéaire et faisant sensiblement le tour dudit axe (A),
- et un niveau de raccordement dans lequel sont formées lesdites conduites d'entrée (4) et de sortie (10).

5. Séparateur selon la revendication 1, caractérisé par le fait qu'il comporte en outre un thermostat (26) placé en contact thermique avec ledit couvercle (12) et commandant ledit élément chauffant (16) pour maintenir la température de ce couvercle entre des limites prédéterminées.

6. Séparateur selon la revendication 5, dans lequel ledit élément chauffant (16) est une résistance électrique de chauffage.

7. Séparateur selon la revendication 6, caractérisé par le fait que ladite résistance de chauffage (16) est insérée par moulage dans la masse dudit couvercle (12), ce couvercle étant constitué d'un métal présentant une température de fusion substantiellement inférieure à celle des matériaux de cette résistance.

8. Séparateur selon la revendication 1, caractérisé par le fait que ladite paroi filtrante (18) et ledit bol de séparation (8) sont disposés sous ledit couvercle (12), ce séparateur comportant en outre un déflecteur (6) disposé au-dessous de ladite paroi filtrante (18) pour recevoir ledit liquide à traiter provenant de ladite entrée (2) et pour lui donner une composante de vitesse circonférentielle autour dudit axe, ledit bol de séparation étant un bol de centrifugation (8) présentant une paroi latérale qui entoure ledit axe et qui s'étend en hauteur entre un fond (9) et une ouverture haute de ce bol, cette paroi recevant ledit liquide à traiter provenant dudit déflecteur et guidant ce liquide en rotation autour dudit axe pour y faire régner une force centrifuge qui amène sélectivement au contact de cette paroi des impuretés relativement denses contenues dans ce liquide, de manière que ces impuretés descendent ensuite sous l'action de la gravité vers le fond de ce bol et qu'un liquide centrifugé remonte pour venir en regard de ladite face amont de ladite paroi filtrante (18).

9. Séparateur selon la revendication 8, dans lequel ledit déflecteur (6) est fixe, ledit liquide à traiter étant reçu sous pression.

## Patentansprüche

1. Abscheider für eine koagulierbare Flüssigkeit, insbesondere für Dieselkraftstoff, mit
- einem Abscheiderbehälter (8) und einer Behälteröffnung,
- einem dicken Deckel (12), um diese Behälteröffnung zu verschließen, wobei dieser Deckel zumindest teilweise aus einem wärmeleitenden Material besteht und eine Innenseite auf Seiten des Abscheiderbehälters und eine Außenseite auf der anderen Seite aufweist,
- einer Eingangsleitung (4), die in diesem Deckel ausgebildet ist, um eine zu behandelnde Flüssigkeit aufzunehmen, die Unreinheiten sowie unter Einwirkung von Kälte koagulierbare Elemente aufweist, und um diese Flüssigkeit in den Abscheiderbehälter zu bringen, damit sie einen Abscheideprozeß für diese Unreinheiten durchläuft,
- einem Heizelement (16), um diese Flüssigkeit zu erwärmen,
- einer Filterwand (18), die von der Innenseite des Deckels getragen wird und in dem Abscheiderbehälter angeordnet ist, um auf einer Seite stromaufwärts vor dieser Wand die zu behandelnde Flüssigkeit zu empfangen, die diesem Abscheideprozeß unterworfen wurde,
- und einem Ausgang des Abscheiders (14), um diese zu behandelnde Flüssigkeit aufzunehmen, die diese Filterwand des Dekkels durchquert hat,
- wobei dieser Abscheider dadurch gekennzeichnet ist, daß das Heizelement (16) in dem Deckel angeordnet ist, um die zu behandelnde Flüssigkeit bei ihrem Durchfluß durch die Eingangsleitung (4) zu erwärmen, und daß der Deckel (12) eine wärmeleitende Verlängerung (24) aufweist, die auf seine Innenseite gegenüber und in der Nähe der stromaufwärtsliegenden Seite der Filterwand (18) vorspringt, um zu verhindern, daß diese Wand von den koagulierbaren Elementen verstopft wird.

2. Abscheider nach Anspruch 1, dadurch gekennzeichnet, daß die wärmeleitende Verlängerung Flügel (24) bildet.

3. Abscheider nach Anspruch 2, in dem der Abscheiderbehälter (8) eine Achse (A) aufweist, die auch die seiner Öffnung und der Filterwand (18) ist, wobei der Deckel (12) die allgemeine Form einer dicken Platte senkrecht zu dieser Achse hat, während Eingangs- (4) und Ausgangsleitungen (10) parallel zu dieser Platte in ihrer Dicke verlaufen und die Flügel sich radial und axial erstrecken und winkelmäßig um die Achse (A) aufeinander folgen.

4. Abscheider nach Anspruch 3, dadurch gekennzeichnet, daß die Filterwand (18) und der Abscheiderbehälter (8) unter dem Dekkel (12) angeordnet sind, wobei der Deckel (12) von unten nach oben gesehen aufweist:
- die wärmeleitende Verlängerung (24), die die Filterwand (18) umgibt,
- ein Heizniveau mit dem Heizelement (16), wobei dieses Element gestreckt ist und im wesentlichen um die Achse (A) herum verläuft,
- und ein Anschlußniveau, in dem die Eingangs- (4) und Ausgangsleitungen (10) ausgebildet sind.

5. Abscheider nach Anspruch 1, dadurch gekennzeichnet, daß er weiter einen Thermostat (26) aufweist, der in thermischem Kontakt mit diesen Deckel (12) angeordnet ist und das Heizelement (16) so steuert, daß die Temperatur dieses Deckels zwischen vorbestimmten Grenzen bleibt.

6. Abscheider nach Anspruch 5, in dem das Heizelement (16) ein elektrischer Heizwiderstand ist.

7. Abscheider nach Anspruch 6, dadurch gekennzeichnet, daß der Heizwiderstand (16) in die Masse des Deckels (12) eingegossen ist, wobei dieser Deckel aus einem Metall besteht, das eine Schmelztemperatur aufweist, die wesentlich niedriger als die der Materialien dieses Widerstands ist.

8. Abscheider nach Anspruch 1, dadurch gekennzeichnet, daß die Filterwand (18) und der Abscheiderbehälter (8) unter dem Deckel (12) angeordnet sind, wobei dieser Abscheider weiter einen Deflektor (6) aufweist, der unterhalb der Filterwand (18) angeordnet ist, um die vom Eingang (2) kommende und zu behandelnde Flüssigkeit zu empfangen und um ihr eine Umfangsgeschwindigkeitskomponente um die Achse zu verleihen, wobei der Abscheiderbehälter eine Trennzentrifuge (8) ist, die eine Seitenwand aufweist, welche die Achse umgibt und sich in der Höhe zwischen einem Boden (9) und einer oberen Öffnung dieses Behälters erstreckt, wobei diese Wand die vom Deflektor kommende zu behandelnde Flüssigkeit empfängt und in Rotation um die Achse führt, um hier eine Zentrifugalkraft zu erzeugen, die relativ dichte, in dieser Flüssigkeit enthaltene Unreinheiten selektiv in Kontakt mit dieser Wand bringt, damit diese Unreinheiten anschließend unter der Einwirkung der Schwerkraft zum Boden dieses Behälters sinken und daß eine zentrifugierte Flüssigkeit hochsteigt, um vor der stromaufwärts liegenden Seite der Filterwand (18) anzukommen.

9. Abscheider nach Anspruch 8, in dem der Deflektor (6) ortsfest ist und die zu behandelnde Flüssigkeit unter Druck eingespeist wird.

## Claims

1. A separator for a liquid capable of waxing, in particular for diesel fuel, the separator comprising:
- a separation bowl (8) and a bowl opening,
- a thick lid (12) for closing said bowl opening, said lid being constituted at least in part by a heat-conducting material and having an inside face adjacent to said separation bowl and an opposite outside face,
- an inlet duct (4) formed in this lid for receiving a liquid to be treated which contains impurities as well as elements capable of waxing under the influence of cold and for conveying this liquid into said separation bowl where it is to be submitted to a process of separating these impurities,
- a heater element (16) for heating said liquid,
- a filtering wall (18) carried by said lid from said inside face thereof, so as to receive on an upstream face of said wall said liquid to be treated and having been submitted to said separation process,
- and a separator outlet (14) for receiving said liquid to be treated after it has passed through said filtering wall of this lid,
- said separator being characterized in that the heater element (16) is disposed in said lid for heating said liquid to be treated during its passage in said inlet duct (4), and that said lid (12) comprises a heat conveying extension (24) protruding on its said inner face facing and in the proximity of said upstream face of said filtering wall (18) so as to prevent said wall from being blocked by said elements capable of waxing.

2. A separator according to claim 1, characterized in that heat conveying extension forms fins (24).

3. A separator according to claim 2, in which said separation bowl (8) presents an axis (A) which is also that of its opening and of said filtering wall (18), the lid (12) having the general shape of a thick plate perpendicular to said axis, inlet (4) and outlet ducts (10) being formed parallel to said plate in the thickness thereof and said fins extending radially and axially and being angularly distributed around said axis (A).

4. A separator according to claim 3, characterized in that said filtering wall (18) and said separation bowl (8) are disposed beneath said lid (12), said lid (12) including in successive levels from bottom to top:
- said heat-conveying extension (24) surrounding said filtering wall (18),
- a heating level including said heater element (16), said element being elongate and forming substantially one turn around said axis (A), and
- a connection level in which said inlet and outlet ducts (4, 10) are formed.

5. A separator according to claim 1,characterized in that it further includes a thermostat (26) placed in thermal contact with said lid (12) and controlling said heater element (16) to maintain the temperature of said lid between predetermined limits.

6. A separator according to claim 5, in which said heater element (16) is an electrical heater resistance.

7. A separator according to claim 6, characterized in that said heater resistance (16) is incorporated in the mass of said lid (12) by casting, said lid being constituted by a metal having a melting point which is substantially lower than that of the materials constituting said resistance.

8. A separator according to claim 1, characterized in that said filtering wall (18) and said separation bowl (8) are disposed beneath said lid (21), said separator further including a deflector (6) disposed beneath said filtering wall (18) for receiving said liquid to be treated from said inlet (2) and for imparting a circumferential velocity component about said axis thereto, said separation bowl being a centrifuging bowl (8) having a side wall which surrounds said axis and which extends vertically between a bottom (8) and a top opening of said bowl, said wall receiving said liquid to be treated from said deflector and guiding said liquid in rotation about said axis in order to cause centrifugal force to exist therein to bring relatively dense impurities contained in said liquid selectively into contact with said side wall, thereby ensuring that said impurities subsequently move down under the action of gravity towards the bottom of the bowl while a centrifuged liquid rises to said upstream face of said filtering wall (18).

9. A separator according to claim 8, in which said deflector (6) is stationary, said liquid to be treated being received under pressure.
